# EUROPÄISCHE PATENTSCHRIFT

(11) **EP 2 203 097 B1**
(45) Veröffentlichungstag und Bekanntmachung des Hinweises auf die Patenterteilung: **09.11.2016**
(21) Anmeldenummer: 08783468.5
(22) Anmeldetag: 03.09.2008
(51) Int. Cl.: A47J 31/54, A47J 31/36, A47J 31/46

(54) **KAFFEEMASCHINEN MIT MINDESTENS ZWEI BRÜHGRUPPEN**
COFFEE MACHINES WITH AT LEAST TWO BREWING UNITS
MACHINE À CAFÉ COMPRENANT AU MOINS DEUX GROUPES D'INFUSION

(30) Priorität: 16.10.2007 CH 16042007
(43) Veröffentlichungstag der Anmeldung: 07.07.2010
(73) Patentinhaber: Rancilio Group S.p.A., 20010 Villastanza Di Parabiago (MI) (IT)
(72) Erfinder: ANLIKER, Markus, CH-5722 Gränichen (CH)
(74) Vertreter: Robba, Pierpaolo
(86) Internationale Anmeldenummer: PCT/CH2008/000368
(87) Internationale Veröffentlichungsnummer: WO 2009/049430

(56) Entgegenhaltungen:
- EP-A- 1 719 439
- US-A- 3 074 340
- US-A- 5 813 318
- US-A1- 2003 000 393
- US-A1- 2005 109 214

## Beschreibung

Die Erfindung betrifft eine Kaffeemaschine mit mindestens zwei Brühgruppen nach dem Oberbegriff des Patentanspruchs 1.

Unter einer Brühgruppe ist eine Zylinder-Kolbeneinheit zum Brühen des gemahlenen Kaffees mit den dazugehörigen mechanischen Antriebs- und Steuerelementen zu verstehen. Kaffeemaschinen mit zwei Brühgruppen sind auf dem Markt erhältlich. Sie arbeiten meist vollautomatisch und stellen auf Knopfdruck ein vorgewähltes Kaffeegetränk bereit. Bei diesen bekannten Kaffeemaschinen sind zwei parallele Brühgruppen vorhanden, die je von einem eigenen Heisswasserboiler gespeist werden und einen eigenen Auslauf für Kaffee haben, so dass zwei Tassen nebeneinander gleichzeitig befüllt werden können. Im Wesentlichen handelt es sich um eine doppelte Kaffeemaschine in einem Gehäuse. Damit kann zwar schneller Kaffee zubereitet und ausgeben werden, aber andere Vorteile als Platzersparnis werden damit kaum erreicht. Die Veröffentlichung WO 98/039998 offenbart einen Kaffeeautomaten mit zwei Brühkammern unterschiedlicher Grösse, die in einem Brühblock parallel angeordnet sind und parallel arbeiten, wobei jedoch jeweils nur in einer Brühkammer Kaffee gebrüht werden kann. Die zweite Brühkammer ist während dieses Brühzyklus leer und kann in dieser Zeit auch nicht für die nächste Kaffeezubereitung vorbereitet werden. Somit arbeiten die beiden Brühkammern zwar parallel können aber nicht unabhängig voneinander betrieben werden.

Die Veröffentlichung US 2003/000393 A1 offenbart einen Kaffeeautomaten mit zwei Brühgruppen, wobei jede Brühgruppe einzeln ansteuerbar ist, so dass, während einer der Brühgruppe ein Kaffeegetränk vorbereitet, erfolgt die Vorbereitung in einer anderen Brühgruppe für die Zubereitung des nächsten Kaffeegetränkes.

Die vorliegende Erfindung stellt sich zur Aufgabe, eine automatische Kaffeemaschine insbesondere für den Einsatz im Gastgewerbe zu schaffen, die eine grosse Variantenvielfalt von Kaffeeprodukten und Qualitäten erzeugen kann und von der in kurzer Zeit grosse Kaffeemengen bezogen werden können.

Diese Aufgabe wird durch eine Vorrichtung mit den Merkmalen des Patentanspruchs 1 gelöst.

Die erfindungsgemässe automatische Kaffeemaschine beinhaltet mindestens zwei voneinander unabhängige und einzeln ansteuerbare Brühgruppen zur Herstellung eines Kaffeegetränkes, eine Vorrichtung zur Aufbereitung und Zuteilung von Kaffeepulver zu den Brühgruppen sowie einen zentralen Kaffee-Auslauf, d.h., dass die Kaffee-Ausläufe der einzelnen Brühgruppen am selben Ort münden. Jeder Brühgruppe ist ein Brühventil vorgeschaltet, das die Zuführung des Heisswassers vom Heisswasserboiler steuert. Dabei kann jeder Brühgruppe ein eigener Boiler zugeordnet sein, oder die Brühgruppen werden aus einem einzigen Boiler gespeist. Für die Herstellung verschiedener Kaffeegetränke wie Espresso oder Melange und dergleichen hat sich gezeigt, dass die Qualität der einzelnen Produkte durch angepasste Brühgruppengeometrie, d.h. durch unterschiedliche Brühzylinder-Durchmesser und/oder Brühzylinder-Höhen, verbessert werden kann. Es ist etwa vorteilhaft, für die Zubereitung eines Espressos eine Brühgruppe mit einem Brühzylinder mit kleinem Durchmesser von beispielsweise 37 mm zu verwenden und für ein Kaffeegetränk, das mit einer grösseren Menge Wasser zubereitet wird, ein Brühzylinder mit einem grösseren Innendurchmesser wie beispielsweise 44 mm. Die Vorrichtung zur Aufbereitung und Zuführung des Kaffees zu den Brühgruppen beinhaltet mehrere Vorratsbehälter, die unterschiedliche Kaffeesorten beinhalten, so dass aufgrund der Wahlmöglichkeit von Kaffeesorte und Brühgruppe mit der erfindungsgemässen Kaffeemaschine eine grosse Variantenvielfalt von Kaffeeprodukten und Qualitäten herstellbar ist. Die Variantenvielfalt ist aufgrund der weiteren, steuerbaren Parameter wie Wassermenge und Temperatur noch erweiterbar. Die Kaffeemaschine beinhaltet weiters eine elektronische Steuerung, so dass nach Wahl eines bestimmten Kaffeeproduktes auf Knopfdruck die gewünschte Kaffeesorte gewählt und die entsprechende Brühgruppe angesteuert wird. Da die einzelnen Brühgruppen unabhängig voneinander arbeiten, ist es möglich, während der Zubereitung eines Kaffees in der einen Brühgruppe, den nächsten Kaffee in der anderen Brühgruppe vorzubereiten. Dadurch wird die Wartezeit zwischen zwei aufeinander folgenden Ausgaben von Kaffeegetränken erheblich reduziert.

Weitere Vorteile der Erfindung folgen aus den abhängigen Patentansprüchen und aus der nachfolgenden Beschreibung, in welcher die Erfindung anhand der in den schematischen Zeichnungen dargestellten Ausführungsbeispielen näher erläutert wird.

Es zeigt:
Fig. 1 ein Schema einer ersten, erfindungsgemäßen Ausführung der Kaffeemaschine,
Fig. 2 ein Schema einer zweiten, nicht erfindungsgemäßen Ausführung der Kaffeemaschine, und
Fig. 3 ein Schema einer dritten, nicht erfindungsgemäßen Ausführung der Kaffeemaschine.

In den Figuren sind für dieselben Elemente jeweils dieselben Bezugszeichen verwendet worden und erstmalige Erklärungen betreffen alle Figuren, wenn nicht ausdrücklich anders erwähnt.

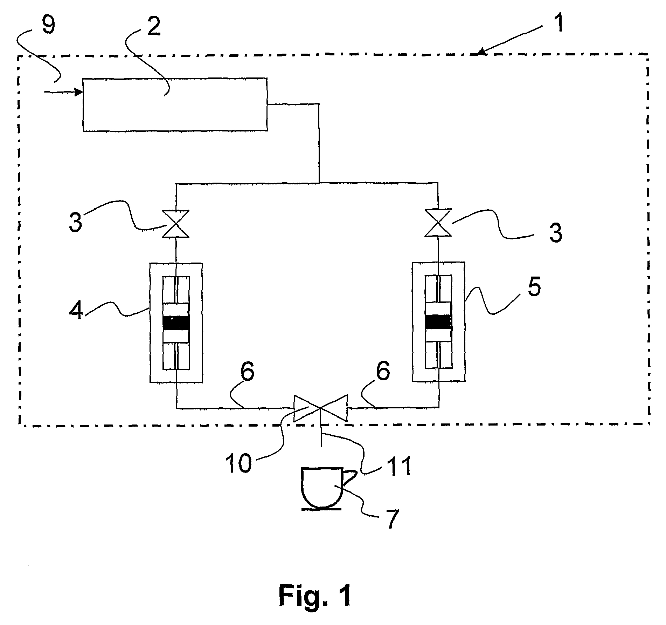

Die Figur 1 zeigt ein Schema einer ersten, erfindungsgemäßen Ausführung der Kaffeemaschine 1 mit einer ersten Brühgruppe 4 und einer zweiten Brühgruppe 5. Die Kaffeemaschine 1 ist in den Zeichnungen mit dem strichpunktierten Rahmen 1 symbolisiert. Beiden Brühgruppen 4, 5 ist ein Brühventil 3 vorgeschaltet. Die Brühgruppen 4, 5 werden über eine verzweigte Leitung mit Heisswasser aus einem gemeinsamen Boiler 2 gespeist, der über die Zuleitung 9 und eine in den Zeichnungen nicht dargestellten Pumpe mit Frischwasser versorgt wird. Die Kaffee-Ausläufe 6 von der ersten Brühgruppe 4 und der zweiten Brühgruppe 5 münden in einem Rückschlagventil 10, das den Rücklauf des Kaffees zur nicht produzierenden Brühgruppe verhindert. Dadurch gelangt das Kaffeegetränk von der Brühgruppe 4, 5 über den Kaffee-Auslauf 6, zum Rückschlagventil 10 und über die Kaffeeausgabe 11 in die Kaffeetasse 7. Für die erste Brühgruppe 4 kann beispielsweise eine Brühgruppe mit kleinem Brühzylinder - Innendurchmesser und für die zweite Brühgruppe 5 ein Brühzylinder mit grösserem Innendurchmesser vorgesehen sein. Die Kaffeemaschine 1 kann auf Kundenwunsch mit den jeweiligen Brühgruppen ausgestattet werde. Wird vom Kunden beabsichtigt, die Kaffeemaschine beispielsweise nur zur Espresso-Herstellung zu verwenden, so kann die Maschine 1 mit zwei gleichen Brühgruppen 4, 5 mit den kleineren Brühzylinder bestückt werden. Das Gleiche gilt natürlich auch umgekehrt, d.h. dass die Maschine auch mit zwei gleichen Brühgruppen mit grossem Brühzylinder - Innendurchmesser bestückt werden kann. Eine solche Bestückung hat den Vorteil, dass in kurzer Zeit eine grosse Kaffeemengen von der Kaffeemaschine 1 bezogen werden kann, da in diesem Fall die beiden Brühgruppen alternierend Kaffee nahezu ohne Unterbruch produzieren können. Während mit einer Brühgruppe 4, 5 Kaffee gebrüht wird, erfolgt die Vorbereitung in der anderen Brühgruppe 5, 4 für die Zubereitung des nächsten Kaffeegetränkes. Die Produktion der Kaffeegetränke mit der erfindungsgemässen Kaffeemaschine erfolgt softwaregesteuert und voll automatisch.

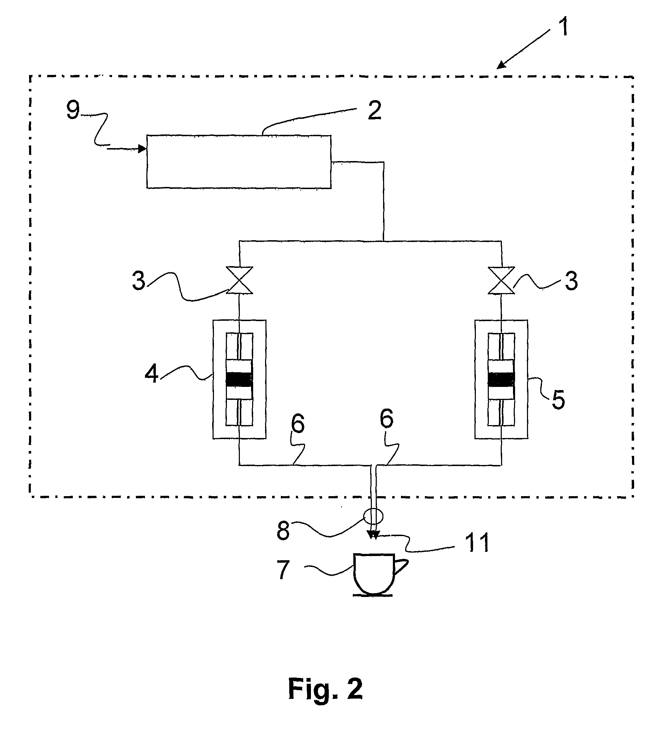

In der Figur 2 ist eine zweite, nicht erfindungsgemäße Ausführung der Kaffeemaschine schematisch gezeigt. Diese Variante entspricht im Wesentlichen jener der Figur 1, wobei jedoch die Kaffee-Ausläufe 6 nicht über ein Rückschlagventil in eine gemeinsame Kaffee-Ausgabe 11 geleitet werden, sondern die beiden Kaffee-Ausläufe 6 münden parallel und am nahezu gleichen Ort. So kann beispielsweise die Kaffee-Ausgabe 11 auch als Doppelrohr ausgeführt sein, was in der Figur als Kreis 8 angedeutet ist. Die getrennten Ausläufe haben den Vorteil, dass Kaffeereste aus einem Kaffee-Auslauf nicht mit dem Kaffeegetränk des anderen Auslaufs vermischt werden. Wird beispielsweise mit der ersten Brühgruppe 4 Koffein haltiger Espresso gebrüht, und anschliessend mit der zweiten Brühgruppe 5 ein Koffein freies Kaffeegetränk gebrüht, so wird aufgrund der getrennten Kaffee-Ausläufe 6 ein Vermischen von Koffein Resten mit dem Koffein freien Getränk unterbunden.

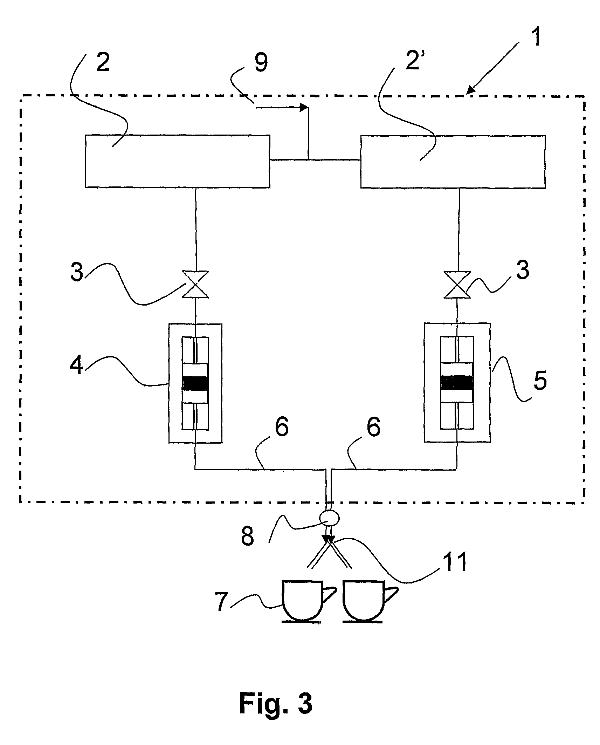

Die Figur 3 zeigt ein Schema einer dritten, nicht erfindungsgemäßen Ausführung der Kaffeemaschine 1. In diesem Ausführungsbeispiel sind zwei unterschiedliche Brühgruppen 4, 5 vorgesehen, nämlich die erste Brühgruppe 4 mit einem kleinen Brühzylinder mit einem Durchmesser von beispielsweise 37 mm und die zweite Brühgruppe 5 mit einem Brühzylinder mit einem Durchmesser von beispielsweise 44 mm. Jeder Brühgruppe 4, 5 ist ein eigener Boiler 2, 2' zugeordnet. Beide Boiler werden über die gemeinsame Frischwasserzuleitung 9 mit Frischwasser versorgt. Die Kaffee-Ausläufe 6 von der ersten Brühgruppe 4 und der zweiten Brühgruppe 5 münden am nahezu gleichen Ort. Die Kaffee-Ausgabe 11 kann wie im vorigen Beispiel gezeigt, auch als Doppelrohr 8 und beispielsweise in Y-Form ausgeführt sein. So können zwei Tassen 7 gleichzeitig befüllt werden.

Die in den Beispielen gezeigten Ausführungsvarianten können natürlich auch auf verschiedenste Weise kombiniert werden und selbstverständlich ist die erfindungsgemässe Kaffeemaschine 1 nicht nur auf zwei voneinander unabhängig angesteuerte Brühgruppen 4, 5 beschränkt, sondern es sind auch mehr als zwei Brühgruppen 4, 5 mit eventuell mehreren Boilern 2, 2' denkbar, so dass einem Boiler 2, 2' jeweils ein oder mehrere Brühgruppen 4, 5 zugeordnet sind, wobei die Kaffeemaschine 1 in allen Ausführungsvarianten vollautomatisch über eine elektronische Steuerung bedient wird.

## Patentansprüche

1. Kaffeemaschine mit mindestens zwei Brühgruppen (4, 5), und mit einer Heisswassereinrichtung (2, 2'), welche die Brühgruppen (4, 5) mit Heisswasser speist, wobei jede Brühgruppe (4, 5) einzeln ansteuerbar ist, so dass, während eine der Brühgruppen (4, 5) ein Kaffeegetränk vorbereitet, die Vorbereitung in einer anderen Brühgruppe (4, 5) für die Zubereitung des nächsten Kaffeegetränkes erfolgt,
**dadurch gekennzeichnet, dass:**
- die Kaffeemaschine (1) eine gemeinsame Kaffee-Ausgabe (11) für die Brühgruppen (4, 5) aufweist;
- die Kaffee-Ausläufe (6) aus den Brühgruppen (4, 5) in der gemeinsamen Kaffee-Ausgabe (11) münden; und
- an der Mündung jedes Kaffee-Auslaufs (6) in der Kaffee-Ausgabe (11) ein Rückschlagventil (10) vorgesehen ist.

2. Kaffeemaschine nach Anspruch 1, **dadurch gekennzeichnet, dass** die Heisswassereinrichtung einen Heisswasserboiler (2) umfasst, der über eine verzweigte Leitung mit den Brühgruppen (4, 5) in Verbindung steht, und die verzweigte Leitung für jede Brühgruppe ein steuerbares Ventil (3) aufweist.

3. Kaffeemaschine nach Anspruch 1, **dadurch gekennzeichnet, dass** die Heisswassereinrichtung einen für jede Brühgruppe (4, 5) einzeln angeordneten Heisswasserboiler (2, 2') aufweist, der mit einer eigenen Leitung über ein Ventil (3) mit der zugehörigen Brühgruppe (4, 5) in Verbindung steht.

## Claims

1. Coffee machine having at least two brewing sections (4, 5), and having a hot water device (2, 2') which supplies hot water to the brewing sections (4, 5), wherein each brewing section (4, 5) can be activated individually so that while one of the brewing sections (4, 5) is preparing a coffee drink, another brewing section (4, 5) is getting ready to brew the next coffee drink, **characterised in that**:
- the coffee machine (1) has a common coffee dispenser (11) for the brewing sections (4, 5);
- the coffee dispensing outlets (6) lead out of the brewing sections (4, 5) to the common coffee dispenser (11); and
- a non-return valve (10) is provided at the opening of each coffee dispensing outlet (6) in the coffee dispenser (11).

2. Coffee machine according to claim 1, **characterised in that** the hot water device comprises a hot water boiler (2) which is connected to the brewing sections (4, 5) by a branched line, and the branched line has a controllable valve (3) for each brewing section.

3. Coffee machine according to claim 1, **characterised in that** the hot water device comprises a hot water boiler (2, 2') arranged separately for each brewing section (4, 5) and is connected to the associated brewing section (4, 5) by an individual line via a valve (3).

## Revendications

1. Machine à café comprenant au moins deux unités d'infusion (4, 5) et un moyen d'eau chaude (2, 2'), qui alimente les unités d'infusion (4, 5) en eau chaude, dans laquelle chaque unité d'infusion (4, 5) peut être commandée individuellement de sorte que, pendant que l'une des unités d'infusion (4, 5) prépare une boisson à base de café, la préparation est effectuée dans une autre unité d'infusion de café (4, 5) pour préparer la boisson à base de café suivante, **caractérisée en ce que** :
- la machine à café (1) comporte une sortie de café (11) commune aux unités d'infusion (4, 5) ;
- les éléments d'extraction de café (6) sortant des unités d'infusion (4, 5) débouchent dans la sortie de café (11) commune ; et
- un clapet anti-retour (10) est prévu au débouché de chaque élément d'extraction de café (6) dans la sortie de café (11).

2. Machine à café selon la revendication 1, **caractérisée en ce que** le moyen d'eau chaude comprenant un réservoir de préparation d' (2) qui est en liaison avec les unités d'infusion (4, 5) par le biais d'un conduit ramifié, et **en ce que** le conduit ramifié comporte une soupape commandable (3) pour chaque unité d'infusion.

3. Machine à café selon la revendication 1, **caractérisée en ce que** le moyen d'eau chaude comporte un réservoir de préparation d'eau chaude (2, 2') qui est prévu individuellement pour chaque unité d'infusion (4, 5) et qui est en liaison avec l'unité d'infusion (4, 5) associée par un conduit qui lui est propre et par le biais d'une soupape (3).
